# EUROPEAN PATENT APPLICATION

(11) **EP 2 068 374 A1**
(43) Date of publication of application: **10.06.2009**
(21) Application number: 06810933.9
(22) Date of filing: 29.09.2006
(51) Int. Cl.: H01L 31/042, H01L 31/048, H01L 31/18

(54) **SOLAR CELL PANEL**

(71) Applicant: Mitsubishi Heavy Industries, Ltd., Tokyo 108-8215 (JP)
(72) Inventor: HORIOKA, Tatsuji, Nagasaki-shi Nagasaki 850-8610 (JP); ISHIDA, Nobuhisa, Nagasaki-shi Nagasaki 850-8610 (JP); URAKATA, Hisataka, Nagasaki-shi Nagasaki 850-8610 (JP); MAMASE, Sinichiro, Nagasaki-shi Nagasaki 851-0392 (JP)
(74) Representative: Bongiovanni, Simone
(86) International application number: PCT/JP2006/319569
(87) International publication number: WO 2008/041298

(57) **Abstract**

A solar panel according to the present invention includes a solar cell module body (12), a gasket part (6A to 6F), and a frame structure (13). The gasket part includes a substantially U-shaped structure, having an upper side part, a lower side part, and a connecting part connecting an end of the upper side part and an end of the lower side part, in which the upper side part and the lower side part on the open side abut the peripheral edge part of the solar cell module body and sandwiches the solar cell module body by an elastic force. The frame structure (13) has a female fitting part (13-1), and fitting of the gasket part with the female fitting part supports the solar cell module body via the gasket part. The female fitting part has a drain hole (13-3) which can drain the water in the female fitting part.

## Description

### Technical Field

The present invention relates to a solar panel and a manufacturing method thereof.

### Background Art

Great attention has been given to clean energy such as photovoltaic power generation in view of environmental problems.

A solar panel is an electric generator used outdoors, and is required to have sufficient durability under very severe conditions, such as ultraviolet rays, wind and snow, salt damage, acid rain, freezing, dirt accumulation, microorganism generation. Of these conditions, moisture entry into the solar cell module is the most serious problem which has an influence on the life. Thus, in many solar panels, glass is used for a substrate or a windshield with the periphery thereof bonded to a frame structure of aluminum or the like. Then, the solar panel is installed in the platform by way of a frame structure.

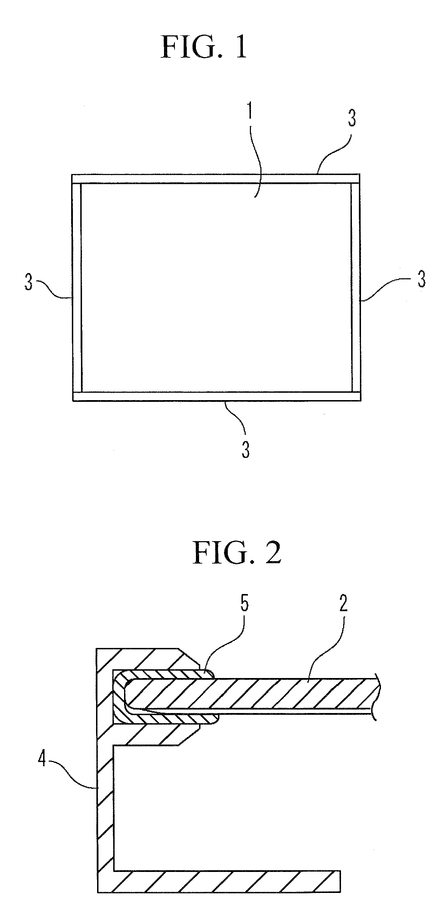

Japanese Laid Open Patent Application JP-P2003-78154A discloses a mounting structure of such a solar cell module. Fig. 1 is a plan view showing a conventional solar panel. As shown in Fig. 1, a solar panel is formed by surrounding the entire periphery of four sides of a solar cell module body 1 with a frame structure 3 of aluminum. The size of the solar cell module body is, for example, 1400 mm × 1100 mm. Between the solar cell module body and the frame structure, a rubber liner as a filling material is inserted to thereby prevent moisture entry from the outer peripheral edge part of the solar cell module body.

However, there is a difference in thermal expansion between glass and aluminum; thus, firmly fixing the both leads to a possibility of detachment of the bonded part or glass crack, which is not preferable. Moreover, an uneven amount of adhesive application possibly results in direct contact between the glass and the aluminum, in this case a temperature difference arises between the glass and the aluminum depending on a meteorological condition, thus resulting in a possibility of "thermal crack" in which glass cracks, which is not preferable.

Accordingly, there is an aluminum frame structure, such as a glass window frame, which supports a solar cell module via a gasket of rubber or the like. Fig. 2 is a sectional view showing a frame structure of a conventional solar cell module. The gasket 5 plays a role as a thermal and mechanical buffer material between a solar cell module body 2 having a glass substrate and an aluminum frame structure 4, and can also play a role in determining the positional relationship between the aluminum frame structure 4 and the solar cell module body 2 having the glass substrate.

However, when the gasket is used in such a manner, bonding is not provided between the glass and the gasket and also between the gasket and the aluminum frame, and thus there is a gap or a space therebetween. Therefore, moisture possibly enters in such a clearance or a space and accumulates therein. Long-term moisture accumulation results in a possibility of inducing moisture entry into the solar cell module.

Achieving widespread use of solar cells requires cost reduction. To this end, the structure needs to be simplified and the manufacture needs to be made easy.

In a case where the solar cell module body is displaced and one part of the light receiving surface of the solar cell module body is hidden by the frame structure, a desired output may not be obtained. Thus, it is required to position the solar cell module body at a specified location.

In association with the description above, Japanese Laid Open Patent Application JP-P2000-22191A discloses a fixing structure of the solar cell module. In this conventional example, a sealing frame material as a frame structure body is an elastic body, such as urethane resin, having a concave groove. In the extended concave groove, the peripheral edge part of a solar cell body is inserted and then an external force is eliminated whereby the solar cell body is sealed.

Japanese Laid Open Patent Application JP-P2001-230440A discloses a fitting structure of the solar cell module. In this conventional example, the outer peripheral portion of a solar cell module body is fitted in a fitting groove while deforming, in a compressed manner, a water stop member of a foaming material disclosed in the fitting groove.

Further, Japanese Laid Open Utility Model Application JP-U-Heisei 06-017257A and Japanese Laid Open Patent Application JP-P2002-94100A disclose a solar panel having structure for draining water accumulated on the light receiving surface of a solar cell module body. In these conventional examples, a notch part is provided in part of a frame structure on the light receiving surface side, and thus provide structure of draining water accumulated on the light receiving surface.

Further, Japanese Laid Open Patent Application JP-P2004-281801A discloses a solar panel having in a frame structure a hollow part in which a filling material is filled for the purpose of preventing water from being accumulated in the hollow part.
Patent Citation 1: Japanese Laid Open Patent Application JP-P2003-78154A
Patent Citation 2: Japanese Laid Open Patent Application JP-P2000-22191A
Patent Citation 3: Japanese Laid Open Patent Application JP-P2001-230440A
Non Patent Citation 4: Japanese Laid Open Utility Model Application JP-U-Heisei 06-017257A
Patent Citation 5: Japanese Laid Open Patent Application JP-P2002-94100A
Patent Citation 6: Japanese Laid Open Patent Application JP-P2004-281801A
Non Patent Citation 1:

### Disclosure of Invention

An object of the present invention is to provide a solar panel which has simple structure and which is easy to manufacture and also to provide a manufacturing method thereof.
Another object of the present invention is to provide a solar panel capable of positioning a solar cell module body at a specified location with respect to a frame structure of a solar cell module body and also to provide a manufacturing method thereof.
Further, still another object of the present invention is to provide a solar panel having structure such that water is not accumulated inside in fitting a solar cell module body in a frame structure via a gasket and also to provide a manufacturing method thereof.
These and other objects, features and advantages of the present invention will be readily ascertained by referring to the following description and drawings.

According to one aspect of the present invention, a solar panel includes a solar cell module body, a gasket part, and a frame structure. The gasket part includes a substantially U-shaped structure having an upper side part, a lower side part, and a connecting part connecting an end of the upper side part and an end of the lower side part, in which the upper side part and the lower side part on the open side abut the peripheral edge part of the solar cell module body and sandwiches the solar cell module body by an elastic force. The frame structure has a female fitting part, and fitting of the gasket part with the female fitting part supports the solar cell module body via the gasket part. This results in simplified structure and easy manufacture of the solar panel.

The gasket part functions as a mechanical and/or thermal buffer material between the solar cell module body and the frame structure, thus permitting protection of the solar cell module body.

An end part of at least one of the upper side part and lower side part of the gasket part on a side facing the connecting part may have a projection part facing inward so as to closely join with the peripheral edge part of the solar cell module body. In this condition, at least one of the upper side part and the lower side part and the projection part form a plate spring structure. This permits more reliably preventing water entry.

It is preferable that the connecting part of the gasket part has a plurality of holes so as to connect together a space between the solar cell module body and the gasket part and a space between the gasket part and the frame structure. It is preferable that, where a thickness of the solar cell module body is t, each of the plurality of holes provided in the gasket part of the connecting part be equal to or larger than in size of t × t square and the pitch of the plurality of holes be equal to or smaller than 2 × t. This permits preventing moisture, if entering inside the gasket, from influencing the solar cell module body.

It is preferable that an end part of at least one of the upper side part and lower side part of the gasket part on the side facing the connecting part has a projection part facing outward to position the solar cell module body with respect to the frame structure. This permits preventing displacement of the solar cell module body and permits reliably achieving power generation.

The female fitting part has a fitting groove into which the gasket is fitted and a first drain hole penetrating through the female fitting part. Then, the first drain hole has a first opening in an inner surface which faces upward of the female fitting part facing the fitting groove, penetrates from the first opening downward through the female fitting part, and has a second opening in an outer surface which faces downward of the female fitting part. Here, "upward" refers to a direction in which the light receiving surface of the solar cell module body faces, and "downward" refers to a direction in which the rear surface of the solar cell module body faces. The solar panel is usually in many cases installed with the light receiving surface facing upward; thus, water inside the fitting groove is efficiently drained through the first drain hole.

The fitting groove may be formed rectangular in cross section or L-shaped in cross section with the back part of the fitting groove bent downward. If the fitting groove is L-shaped in cross section, the first opening of the first drain hole is formed in the inner surface facing the back part of the fitting groove.

The frame structure has a leg part formed into a substantially L-shaped form in cross section, which is composed of a side surface part that extends downward from the outer surface facing downward and a bottom surface part that extends inward of the frame structure from a lower end of the side surface part. Here, it is preferable that the side surface part joins with the outside surface facing downward at a more inner side of the frame structure than a position where the second opening is provided. As a result, in a case where the solar panel of the present invention is installed in plural, the second opening included in the first drain hole is not covered by another solar panel provided next to the solar cell panel.

It is preferable that the side surface part have a second drain hole which penetrates therethrough from the inner side of the frame structure to outward of the framw structure. This permits moisture present in a space enclosed by the solar cell module body and the leg part in a substantially U-shaped manner to be efficiently drained out of the solar panel.

It is preferable that the connecting part and a bottom surface of the fitting groove facing the connecting part be separated from each other. This provides a wide space at the back of the fitting groove, which permits preventing water from being held in a narrow space due to a capillarity phenomenon, thus providing structure such that water is hardly to accumulate inside the fitting groove.

It is preferable that the frame structure be an extrusion-molded product or a press-molded product. This permits mass production of solar panels at a low price.

According to another aspect of the present invention, a manufacturing method of a solar panel is achieved by: (a) fitting an opening part of a gasket part having a substantially U-shaped structure and a solar cell module body with each other, wherein the gasket part has an upper side part, a lower side part, and a connecting part connecting together one end of the upper side part and one end of the lower side part, (b) bringing the upper side part and the lower side part to abut a peripheral edge part of the solar cell module body and sandwiching the solar cell module body by an elastic force, and (c) fitting the gasket part with a female fitting part of the frame structure relative to each other to thereby support the cell module body via the gasket part.

In this case, when the gasket part is provided with a single gasket and has a notch part of 90 degrees at a region corresponding to a corner of the solar cell module body, the step (a) may include (a1) bending the gasket part at the notch part thereof at a right angle. Alternately, when the gasket part is provided with four gaskets with each end part cut at a predetermined angle, the step (a) may include (a2) fitting the four gaskets with the solar cell module body.

The step (a) may include (a3) joining together contact lines of the gasket part at the region corresponding to a corner of the solar cell module body.

When, at an end part of at least one of the upper side part and the lower side part of the gasket part on a side facing the connecting part, a projection part is provided which is oriented inward so as to closely join with the peripheral edge part of the solar cell module body, the step (a) may include sealing the inside of the gasket part by an elastic force provided by the plate spring structure between at least one of the upper and the lower side parts and the projection part.

The step (c) may include (c1) positioning the solar cell module body with respect to the frame structure by using the projection part oriented outward and provided at the end part of at least one of the upper side part and the lower side part of the gasket part on the side facing the connecting part.

### Brief Description of Drawings

[Fig. 1] Fig. 1 is a plan view showing a conventional solar panel having the entire periphery of four sides of a solar cell module body surrounded by a frame material of aluminum.
[Fig. 2] Fig. 2 is a sectional view showing a frame structure of a conventional solar cell module.
[Fig. 3A] Fig. 3A is a perspective view showing a condition in which a substantially U-shaped gasket is fitted to a solar cell module body.
[Fig. 3B] Fig. 3B is a perspective view showing a condition in which the substantially U-shaped gasket is fitted to the solar cell module body.
[Fig. 4A] Fig. 4A is a perspective view showing a condition in which another substantially U-shaped gasket is fitted to the solar cell module body.
[Fig. 4B] Fig. 4B is a perspective view showing a condition in which another substantially U-shaped gasket is fitted to the solar cell module body.
[Fig. 5A] Fig. 5A is a perspective view showing a condition in which a substantially U-shaped gasket is fitted to a solar cell module body in a first embodiment of the present invention.
[Fig. 5B] Fig. 5B is a perspective view showing a condition in which the substantially U-shaped gasket is fitted to the solar cell module body in the first embodiment of the present invention.
[Fig. 6A] Fig. 6A is a perspective view showing a condition in which another substantially U-shaped gasket is fitted to the solar cell module body in the first embodiment of the present invention.
[Fig. 6B] Fig. 6B is a perspective view showing a condition in which another substantially U-shaped gasket is fitted to the solar cell module body in the first embodiment of the present invention.
[Fig. 7A] Fig. 7A is a sectional view showing condition before and after a gasket and the solar cell module body are fitted with each other.
[Fig. 7B] Fig. 7B is a sectional view showing condition before and after the gasket and the solar cell module body are fitted with each other.
[Fig. 8A] Fig. 8A is a sectional view showing condition before and after a gasket and the solar cell module body are fitted with each other in a second embodiment of the present invention.
[Fig. 8B] Fig. 8Bis a sectional view showing condition before and after the gasket and the solar cell module body are fitted with each other in the second embodiment of the present invention.
[Fig. 9A] Fig. 9A is a sectional view showing a condition in which a gasket and the solar cell module body are fitted with each other.
[Fig. 9B] Fig. 9B is a sectional view showing a condition in which a gasket and the solar cell module body are fitted with each other in a third embodiment of the present invention.
[Fig. 10A] Fig. 10A is a perspective view showing a condition in which the gasket and the solar cell module body are fitted with each other in the third embodiment of the present invention.
[Fig. 10B] Fig. 10B is a perspective view showing a condition in which the gasket and the solar cell module body are fitted with each other in the third embodiment of the present invention.
[Fig. 11] Fig. 11 is a sectional view showing a condition in which the solar cell module body is disproportionately fitted toward a frame structure.
[Fig. 12] Fig. 12 is a sectional view showing a condition in which the solar cell module body is fitted to a frame structure in a fourth embodiment of the present invention.
[Fig. 13] Fig. 13 is a sectional view showing a solar panel according to a fifth embodiment of the present invention.
[Fig. 14] Fig. 14 is a sectional view showing one example of a condition in which the solar panel according to the fifth embodiment of the present invention is so installed as to be arrayed in plural.
[Fig. 15] Fig. 15 is a sectional view showing a condition in which the solar panel according to the fifth embodiment of the present invention is installed in a platform 14.
[Fig. 16] Fig. 16 is a sectional view showing a solar panel according to a sixth embodiment of the present invention.
[Fig. 17] Fig. 17 is a sectional view showing a solar panel according to a seventh embodiment of the present invention.
[Fig. 18] Fig. 18 is a sectional view showing a solar panel according to an eighth embodiment of the present invention.

### Best Mode for Carrying Out the Invention

Hereinafter, a solar panel of the present invention will be described in detail referring to the attached drawings. In the description below, the present invention refers to, as an example, a thin film type solar cell such as amorphous silicon. However, it would be obvious to those skilled in the art that the present invention is not limited to the thin film type solar cell but also applicable to a crystal type solar cell.

In a thin film type solar cell module body, a transparent electrode layer, a silicon type thin film electric power generation layer, and a back surface electrode layer are formed on the transparent substrate, and the back surface opposite to the transparent substrate is sealed by a backseat via an EVA. Hereinafter, embodiments of the present invention will be described referring to the attached drawings. Note that, in the description below, upward means a direction in which the light receiving surface of the solar cell module body faces, and downward means a direction in which the back face of the solar cell module body faces.

### (First Embodiment)

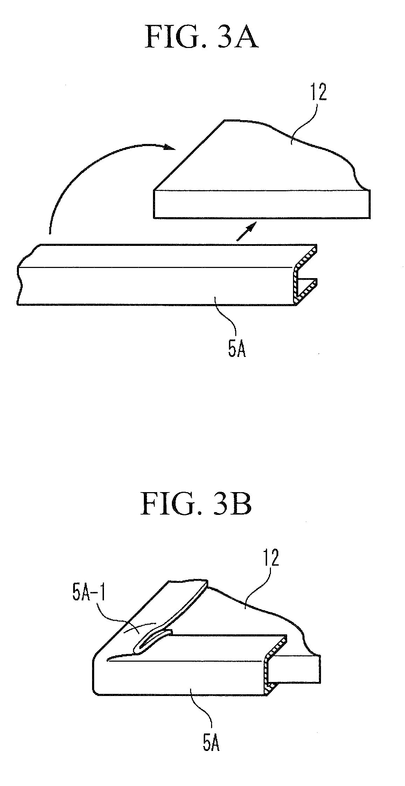

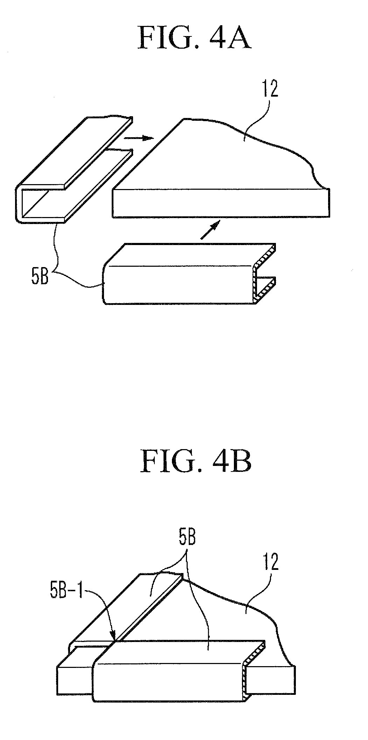

Figs. 3A and 3B are perspective views each showing one example in which a substantially U-shaped gasket 5A is fitted at the periphery of a rectangular plate-like solar cell module body 12. Surrounding the entire periphery of the solar cell module body 12 with one gasket 5A as shown in Fig. 3A results in formation of a portion 5A-1 folded at a corner part as shown in Fig. 3B, making it difficult to assemble it into a frame structure. Figs. 4A and 4B are perspective views each showing one example in which substantially U-shaped gaskets 5B are fitted to the periphery of the rectangular plate-like solar cell module body 12. If the four gaskets 5B are separately fitted to four sides of the solar cell module body 12 as shown in Fig. 4A, the gaskets make contact with each other only at a point 5B-1 of a corner part as shown in Fig. 4B, which is not sufficient to prevent water entry into the solar cell module body.

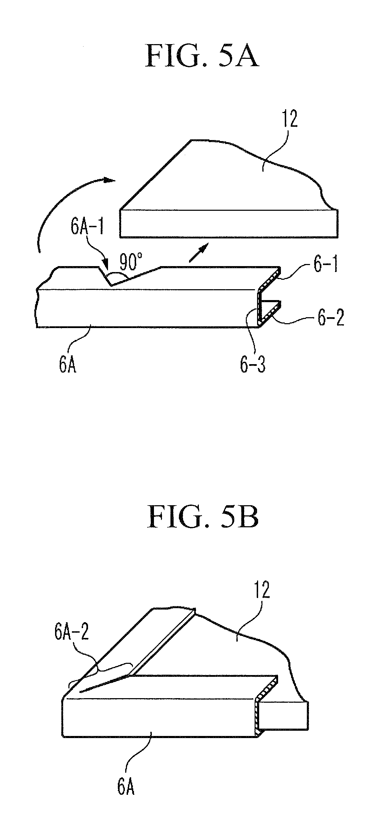

Figs. 5A and 5B are perspective views each showing one example in which a substantially U-shaped gasket 6A is fitted to the periphery of the rectangular plate-like solar cell module body 12 in a first embodiment of the present invention. In the present invention, the gasket 6A has an upper side part 6-1, a lower side part 6-2, and a connecting part 6-3 connecting these together. The upper side part 6-1 and the lower side part 6-2 are substantially parallel with each other, the upper side part 6-1 and the connecting part 6-3 intersect with each other at substantially right angles, and the lower side part 6-2 and the connecting part 6-3 intersect with each other at substantially right angles. Here, in the cross section of the gasket 6A, the upper side part 6-1 and the lower side part 6-2 correspond to vertical lines of a U shape and the connecting part 6-3 corresponds to a curve at the bottom of the U shape. Thus, the gasket 6A is referred to as a substantially U-shape. Alternatively, the connecting part 6-3 forming the bottom part of the U shape may link together the upper side part 6-1 and the lower side part 6-2 not by a curve but by a straight line. In this specification, a substantially U-shape is used to denote the same meaning.

As shown in Fig. 5A, in a case where the entire periphery of the solar cell module body 12 is surrounded by one gasket 6A, notch parts 6A-1 are previously formed in regions of the upper side part 6-1 and the lower side part 6-2 of the gasket 6A corresponding to a corner part of the solar cell module body 12. The notch part 6A-1 is shaped in a triangle with a vertex angle of substantially 90 degrees. As shown in Fig. 5B, when such a gasket 6A is bent at a region corresponding to the corner part, the gasket 6A at the corner part of the solar cell module body 12 makes line contact at a joint 6A-2, thus permitting prevention of water entry into the solar cell module body 12.

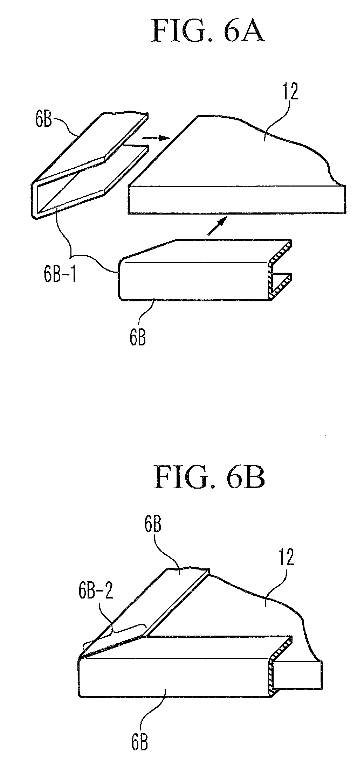

Figs. 6A and 6B are perspective views each showing one example of a case where substantially U-shaped gaskets 6B are fitted to the periphery of the rectangular plate-like solar cell module body 12 in the first embodiment of the present invention. When the four gaskets 6B are separately fitted at the four sides of the solar cell module body 12 as shown in Fig. 6A, both ends 6B-1 of each gasket 6B is cut at an angle of 45 degrees as shown in Fig. 6B. As a result, the two gaskets 6B can be combined with each other at the corner part of the solar cell module body 12, thus forming an angle of substantially 90 degrees, so that the gaskets 6B at the corner part can be brought into line contact at a joint 6B-2. This permits preventing water entry into the solar cell module body 12.
In the examples shown in Figs. 5A, 5B, 6A, and 6B, bonding a joint of the gasket at the corner part can further improve waterproof property. Here, it is obvious that, in the examples shown in Figs. 6A and 6B, the gaskets are not necessarily cut at 45 degrees as long as the sum of cut angles of the two gaskets is 90 degrees.

### (Second Embodiment)

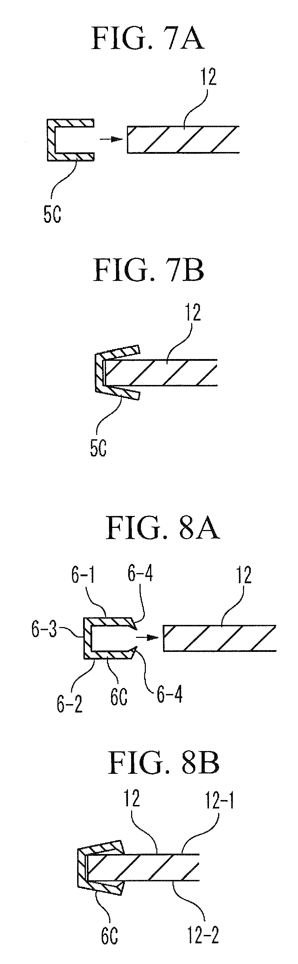

Next, a solar panel according to a second embodiment of the present invention will be described. Figs. 7A and 7B are sectional views showing conditions before and after a gasket 5C and the solar cell module body 12 are fitted with each other. Fig. 7A shows the condition before the fitting and Fig. 7B shows the condition after the fitting. As shown in Fig. 7A, the cross section of the gasket 5C is substantially U-shaped. As shown in Fig. 7B, when the solar cell module body 12 is fitted with the gasket 5C, the leading end of the gasket 5C turns up, so that water entry into the solar cell module body 12 may be permitted.

Figs. 8A and 8B are sectional views showing conditions before and after a gasket and the solar cell module body are fitted with each other in the second embodiment of the present invention. In the present invention, as shown in Fig. 8A, a projection part 6-4 is formed at the end part of each of an upper side part 6-1 and lower side part 6-2 of the gasket 6C opposing a connecting part 6-3 thereof. This projection 6-4 forms plate spring structure together with the sides. As shown in Fig. 8B, when the gasket 6C is fitted to the solar cell module body 12, the gasket 6C is closely attached to a light receiving surface 12-1 and/or a back surface 12-2 of the solar cell module body 12, thus preventing water entry into the solar cell module body 12.

### (Third Embodiment)

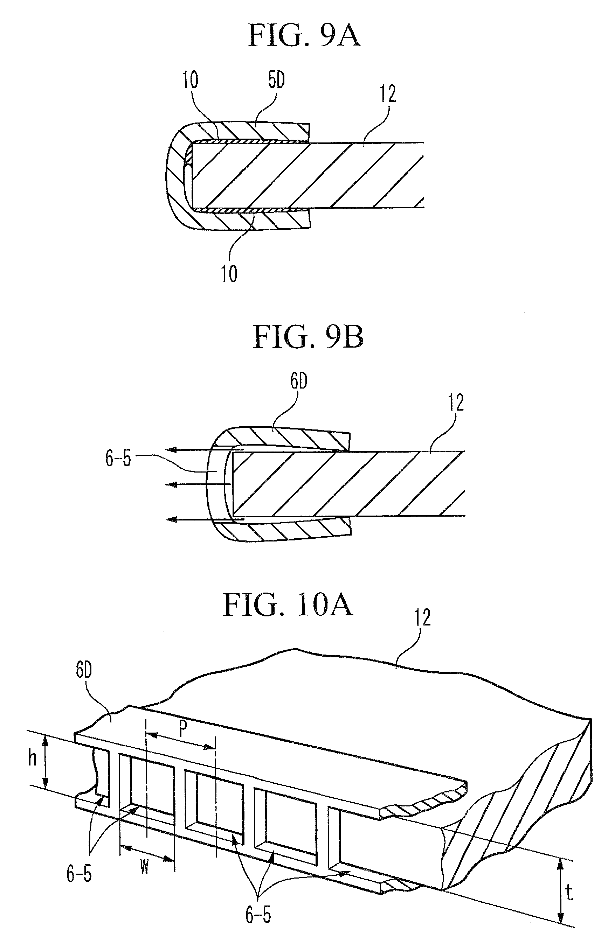

Next, a solar panel according to a third embodiment of the present invention will be described. Figs. 9A and 9B are sectional views showing conditions in which the gasket and the solar cell module body are fitted with each other. As shown in Fig. 9A, a space, although small, may be formed between the gasket 5D and the solar cell module body 12. In this space, moisture 10 possibly enters, although in a small amount, due to a capillarity phenomenon, dew condensation, or the like. Therefore, in the present invention, as shown in Fig. 9B, holes 6-5 are provided in a gasket 6D so that the moisture can be discharged as shown by arrows in the figure. In this case, the moisture entering the inside is small in amount and held in the small gap between the gasket 6D and the solar cell module body 12 due to surface tension or a capillarity phenomenon. Therefore, such moisture discharge is achieved mainly by vaporization. Thus, it is preferable that the holes 6-5 of the gasket 6D is large and the interval therebetween is narrow.

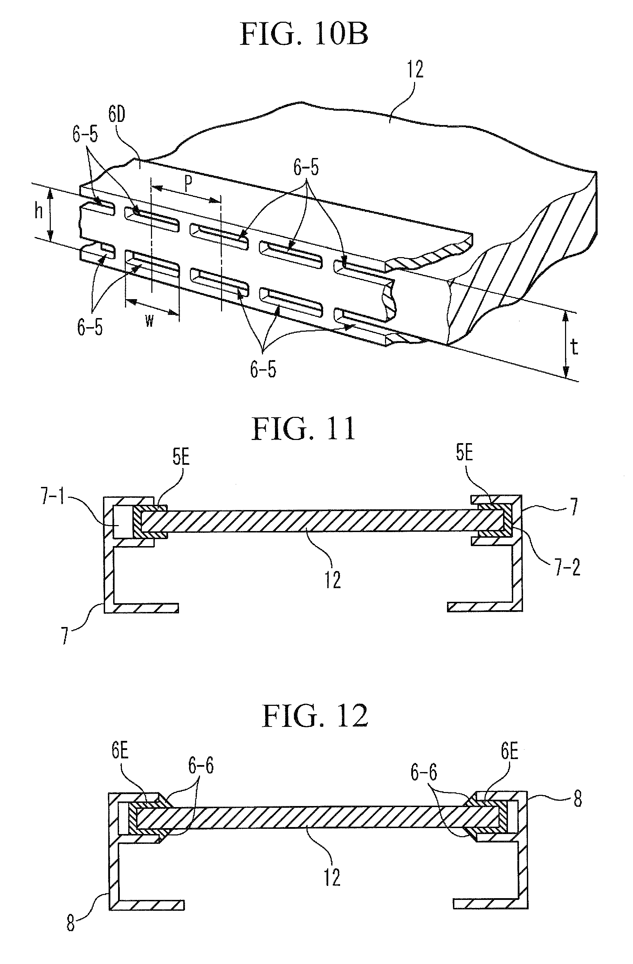

Figs. 10A and 10B are perspective views showing conditions in which the gasket and the solar cell module body are fitted with each other in the third embodiment of the present invention. As shown in Fig. 10A, it is preferable that, where the thickness of the module body 12 is t, a height h of the holes 6-5 be equal to or larger than the thickness t, a width w of the holes 6-5 be equal to or larger than the thickness t, and a thickness between the holes is equal to or smaller than the thickness t, that is, the shape of the hole be equal to or larger than a substantially t × t square and a hole pitch p be equal to or smaller than 2 × t.

Here, to discharge the moisture held in the gap between the upper and lower side parts of the gasket 6D and the solar cell module body 12, the upper and lower parts of the holes 6-5 leading to these gaps may be left and the middle portion thereof may be covered, and this embodiment is shown in Fig. 10B. Further, the holes 6-5 shown in Fig. 10B may be provided at the upper and lower parts alternately to thereby reduce the number of holes 6-5. This increases the rigidity of the gasket 6D and results in a stronger force of sandwiching the solar cell module body 12 with the gasket 6D.

### (Fourth Embodiment)

Next, a solar panel according to a fourth embodiment of the present invention will be described. Fig. 11 is a sectional view showing a condition in which a solar cell module body is disproportionately fitted toward a frame structure. As shown in Fig. 11, in a case of a simple, substantially U-shaped gasket 5E, the solar cell module body 12 may be disproportionately fitted to the frame structure 7 theretoward. In such a case, there may possibly arise unfavorable circumstances, such as malfunction caused by the contacting of the hole 6-5 of the gasket with the frame structure 7 at a surface 7-2, possible water accumulation caused by formation of a pocket-like space 7-1 between the frame structure 7 and the solar cell module body 12, and the like. Fig. 12 is a sectional view showing a condition in which the solar cell module body is fitted to the frame structure in the fourth embodiment of the present invention. Therefore, in the present invention, as shown in Fig. 12, at both ends of a gasket 6E substantially U-shaped in cross section, projections 6-6 are provided, so that the frame structure 8 and the solar cell module body 12 can be positioned by these projections 6-6.

As described above, in the solar panel according to the present invention, no gap is formed between the gasket and the solar cell module body to thereby prevent entry of rain water and the like to the inside. Moisture entering the inside due to a capillarity phenomenon, moisture suctioned to the inside due to a pressure difference between the inside and the outside caused by a temperature difference between the daytime and the nighttime or the like, and moisture entering the inside as vapor and becoming condensed are discharged as droplets or vapor through holes provided in the gasket, thus preventing water accumulation inside the gasket.

### (Fifth Embodiment)

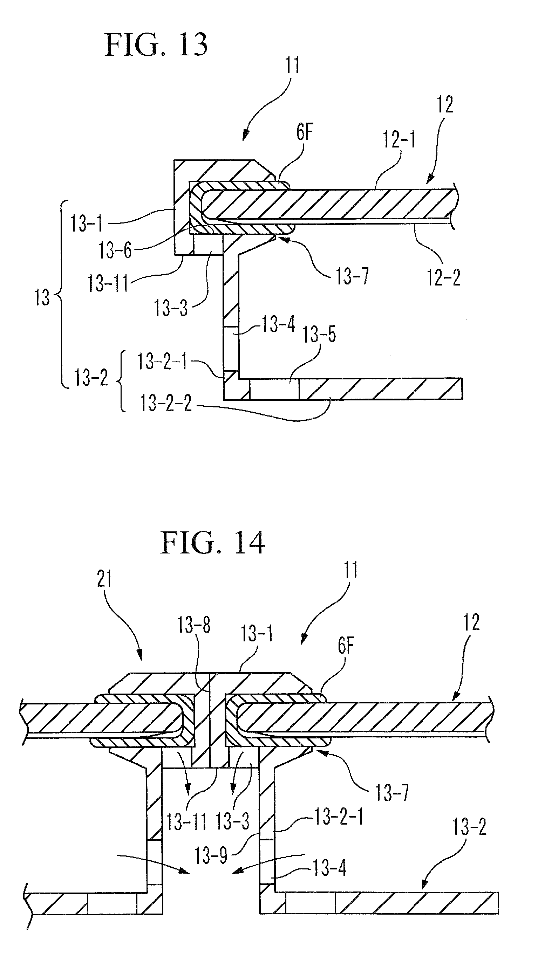

Fig. 13 is a sectional view showing a solar panel 11 according to a fifth embodiment of the present invention. The solar panel 11 is composed of: a solar cell module body 12; a gasket 6F which is U-shaped in cross section and is fitted to the peripheral edge part of the solar cell module body 12; and a frame structure 13 which supports the solar cell module body 12 via the gasket 6F. The solar panel 11 is, in many cases, installed with a light receiving surface 12-1 thereof vertically oriented upward, but is also, in some cases, installed on the wall surface in such a manner as to be oriented horizontally. The surface opposite to the light receiving surface of the solar cell module body 12 is a back surface 12-2. The frame structure 13 is formed of a female fitting part 13-1 having an fitting groove 13-7 substantially rectangular in cross section; and a leg part 13-2 L-shaped in cross section. A drain hole 13-3 formed in this female fitting part 13-1 has a first opening in an inner surface 13-6 which faces upward of the fitting groove 13-7, penetrates downward through the female fitting part 13-1, and has a second opening in an outer surface 13-11 which faces downward of the female fitting part 13-1. Here, the leg part 13-2 is formed of: a side surface part 13-2-1 which extends downward from the outer surface 13-11 facing downward of the female fitting part 13-1; and a bottom surface part 13-2-2 which extends inward of the frame structure 13 from the lower end of the side surface part 13-2-1. Then, the side surface part 13-2-1 is joined with the outer surface 13-11 facing downward at a more inner side of the frame structure 13 than the position where the second opening of the drain hole 13-3 is provided. Further, in the side surface part 13-2-1 and the bottom surface part 13-2-2, drains 13-4 and 13-5 are respectively formed. The solar cell plate body 12 is fitted with the female fitting part 13-1 via the gasket 6F by being inserted in the fitting groove 13-7.

The position of the second opening of the drain hole 13-3 formed in the female fitting part 13-1 is located at a more outer side than the position where the side surface part 13-2-1 is joined with the female fitting part 13-1. Thus, water moving along the light receiving surface 12-1 or the back surface 12-2 of the solar cell module body 12 and then entering inside the fitting groove 13-7 can be drained out of the solar panel 11. Since the drain holes 13-4 and 13-5 are also formed in the side surface part 13-2-1 and the bottom surface part 13-2-1, respectively, water present in a space enclosed by the solar cell module body 12 and the leg part 13-2 in a C-shaped manner is drained out of the solar panel 11. This prevents water entry into the solar cell module body 12.

Fig. 14 is a sectional view showing one example of a condition in which the solar panel according to the fifth embodiment of the present invention is so installed as to be arrayed in plural. Since the second opening of the drain hole 13-3 of the solar panel 11 is provided in the outer surface 13-11 facing downward, the second opening of the drain hole 13-3 is not covered by a solar panel 21 installed adjacently thereto. There is a level difference between an outside surface 13-8 of the female fitting part 13-1 and an outside surface 13-9 of the side surface part 13-2-1; thus, the outside surface 13-9 is located at a more inner side of the frame structure 13 than the outside surface 13-8. Thus, the drain hole 13-4 is not covered by the solar panel 21 adjacently installed. Therefore, as shown by arrows in Fig. 14, water in the space enclosed by the solar cell module body 12 and the leg part 13-2 in a C-shaped manner and water in the fitting groove 13-7 are drained toward a space between the solar panels 11 and 21. This prevents water entry into the solar cell module body 12.

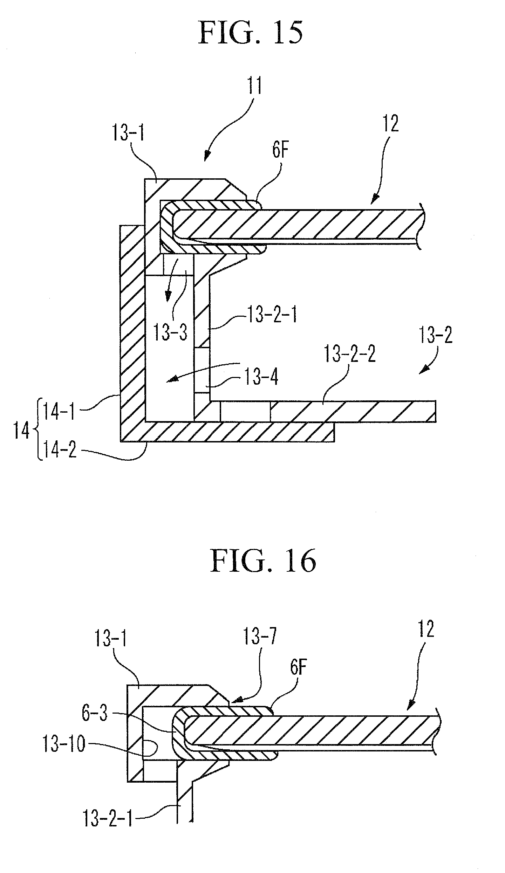

Fig. 15 is a sectional view showing a condition in which the solar panel according to the fifth embodiment of the present invention is installed on a platform 14. The platform 14 is formed into an L shape in cross section formed of a side surface part 14-1 and a bottom surface part 14-1. The solar panel 11 is installed with a female fitting part 13-1 and a bottom surface part 13-2-2 abutting the side surface part 14-1 and the bottom surface part 14-2, respectively, of the platform 14. Also in this case, the drain hole 13-3 and the bottom surface part 13-4 are not covered by the platform 14. Thus, as shown by arrows in the Fig. 15, water in a space enclosed by the solar cell module body 12 and the leg part 13-2 in a C-shaped manner and also water in the fitting groove 13-7 are drained toward the space between the solar panel 11 and the platform 14. This permits water entry into the solar cell module body 12.

### (Sixth Embodiment)

Fig. 16 is a sectional view showing a solar panel according to a sixth embodiment of the present invention. In the solar panel according to the fifth embodiment, the peripheral edge part of the solar cell module body 12 is inserted in the back of the fitting groove 13-7. On the other hand, in the sixth embodiment of the present invention, instead of such structure, it is possible to provide structure as shown in Fig. 16 that a connecting part 6-3 of a gasket 6F and a bottom surface 13-10 of an fitting groove 13-7 facing the connecting part 6-3 are separated from each other to thereby provide a space at the back of the fitting groove 13-7.

As described above, providing a wide space at the back of the fitting groove 13-7 by separating the connecting part 6-3 and the bottom surface 13-10 of the fitting groove 13-7 from each other permits preventing water from being held in the narrow space due to the capillarity phenomenon. Therefore, the solar panel according to the sixth embodiment of the present invention is structured such that water is hardly likely to accumulate inside the fitting groove 13-7.

In the present embodiment, to position the solar cell module body with respect to the frame structure, a gasket 6E having the projections 6-6 may be used.

### (Seventh Embodiment)

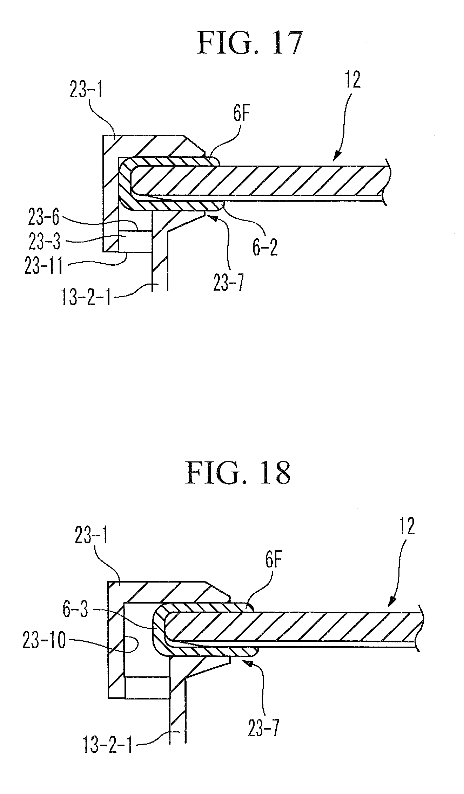

Fig. 17 is a sectional view showing a solar panel according to a seventh embodiment of the present invention. The solar panel according to the seventh embodiment of the present invention is so structured as to be provided with a female fitting part 23-1 shown in Fig. 17 instead of the female fitting part 13-1 of the solar panel according to the fifth embodiment. In the solar panel according to the seventh embodiment, an fitting groove 23-7 formed at the female fitting part 23-1 is L-shaped in cross section with the back part bent downward. Then, a drain hole 23-3 formed in the female fitting part 23-1 has a first opening in an inner surface 23-6 which faces the back part of the fitting groove 23-7 and also faces upward, penetrates downward through the female fitting part 23-1, and has a second opening in an outer surface 23-11 which faces downward of the female fitting part 23-1. A lower side part 6-2 of a gasket 6F and the inner surface 23-6 facing upward are separated from each other, and a space is formed in this gap.

As described above, the separation of the lower side part 6-2 and the inner surface 23-6 facing upward from each other prevents water from accumulating in this space due to the capillarity phenomenon.

### (Eighth Embodiment)

Fig. 18 is a sectional view showing a solar panel according to an eighth embodiment of the present invention. In the solar panel according to the eighth embodiment of the present invention, the periphery edge part of a solar cell module body 12 is inserted to the back part of a fitting groove 23-7. In stead of providing such structure, like the solar panel according to the eighth embodiment of the present invention shown in Fig. 18, it is also possible to provide structure such that a space is provided at the back of the fitting groove 13-7 by separating a connecting part 6-3 of a gasket 6F and a base surface 23-10 of the fitting groove 23-7 facing the connecting part 6-3 from each other.

Providing a wide space by separating the connecting part 6-3 and the base surface 23-10 of the fitting groove 23-7 from each other in this manner permits preventing water from being held in a narrow space due to the capillarity phenomenon. Therefore, the solar panel according to the eighth embodiment of the present invention is structured such that water is hardly likely to accumulate at the back of the fitting groove 23-7.

In the present embodiment, to position the solar cell module body with respect to the frame structure, the gasket 6E having the projections 6-6 may be used.

In the solar panel shown as the embodiment of the present invention, the frame structure may be manufactured by extrusion molding or press molding. Adopting such a manufacturing method permits mass production of solar panels at a low price.

According to the present invention, the structure of the solar panel is simplified and easy manufacture is achieved. Moreover, in fitting the solar cell module body to the frame structure via a gasket, the solar panel is achieved which has structure that prevents water from accumulating inside. In addition, the solar cell module body can be positioned at a specified position with respect to the frame structure.

It is apparent that the present invention is not limited to the above embodiment that may be modified and changed within the technical scope of the invention.

## Claims

1. A solar panel comprising:
a solar cell module body;
a gasket part which includes a substantially U-shaped structure having an upper side part, a lower side part, and a connecting part connecting an end of said upper side part and an end of said lower side part, and in which said upper side part and said lower side part on an open side abut a peripheral edge part of said solar cell module body and sandwiches said solar cell module body by an elastic force; and
a frame structure which has a female fitting part, and in which fitting of said gasket part with said female fitting part supports said solar cell module body via said gasket part.

2. The solar panel according to claim 1, wherein said gasket part functions as a mechanical and/or thermal buffer material between said solar cell module body and said frame structure.

3. The solar panel according to claim 1 or 2, wherein an end part of at least one of said upper side part and lower side part of said gasket part on a side facing said connecting part has a projection part facing inward so as to closely join with said peripheral edge part of said solar cell module body.

4. The solar panel according to claim 3, wherein at least one of said upper side part and said lower side part and said projection part form a plate spring structure.

5. The solar panel according to any of claims 1 to 4, wherein said connecting part of said gasket part has a plurality of holes so as to connect together a space between said solar cell module body and said gasket part and a space between said gasket part and said frame structure.

6. The solar panel according to claim 5, wherein a thickness of said solar cell module body is t, each of said plurality of holes provided in said gasket part of said connecting part is equal to or larger than in size of t × t square and a pitch of said plurality of holes is equal to or smaller than 2 × t.

7. The solar panel according to any of claims 1 to 6, wherein an end part of at least one of said upper side part and lower side part of said gasket part on a side facing said connecting part has a projection part facing outward to position said solar cell module body with respect to said frame structure.

8. The solar panel according to claim 1, wherein said female fitting part has:
a fitting groove into which said gasket is fitted, and
a first drain hole penetrating through said female fitting part,
wherein said first drain hole has:
a first opening in an inner surface which faces upward of said female fitting part facing said fitting groove, and
a second opening in an outer surface which faces downward of said female fitting part,
wherein said first drain hole penetrates from said first opening downward through said female fitting part,
wherein said upward is a direction in which said light receiving surface of said solar cell module body faces, and said downward is a direction in which said rear surface of said solar cell module body faces.

9. The solar panel according to claim 8, wherein said fitting groove is formed rectangular in cross section.

10. The solar panel according to claim 8, wherein said fitting groove is formed L-shaped in cross section with a back part of said fitting groove bent downward, and
wherein said first opening of said first drain hole is formed in said inner surface of said female fitting part, facing said back part of said fitting groove.

11. The solar panel according to claim 9 or 10, wherein said frame structure has a leg part formed into a substantially L-shaped form in cross section, which is composed of a side surface part that extends downward from said outer surface facing downward and a bottom surface part that extends inward of said frame structure from a lower end of said side surface part,
wherein said side surface part joins with said outside surface of said female fitting part, facing downward at a more inner side of said frame structure than a position where said second opening is provided.

12. The solar panel according to claim 11, wherein said side surface part have a second drain hole which penetrates therethrough from said inner side of said frame structure outward.

13. The solar panel according to claim 8, wherein said connecting part of said gasket part and a bottom surface of said fitting groove facing said connecting part is separated from each other.

14. The solar panel according to claim 1, wherein said frame structure be an extrusion-molded product or a press-molded product.

15. A manufacturing method of a solar panel comprising:
(a) fitting an opening part of a gasket part having a substantially U-shaped structure and a solar cell module body with each other, wherein said gasket part has an upper side part, a lower side part, and a connecting part connecting together one end of said upper side part and one end of said lower side part;
(b) bringing said upper side part and said lower side part to abut a peripheral edge part of said solar cell module body and sandwiching said solar cell module body by an elastic force; and
(c) fitting said gasket part with a female fitting part of said frame structure relative to each other to thereby support said cell module body via said gasket part.

16. The manufacturing method of a solar panel according to claim 15, wherein said gasket part is provided with a single gasket and has a notch part of 90 degrees at a region corresponding to a corner of said solar cell module body,
wherein said step (a) includes:
(a1) bending said gasket part at said notch part thereof at a right angle.

17. The manufacturing method of a solar panel according to claim 15, wherein said gasket part is provided with four gaskets with each end part cut at a predetermined angle,
wherein said step (a) includes:
(a2) fitting said four gaskets with said solar cell module body.

18. The manufacturing method of a solar panel according to claim 15, wherein said step (a) includes:
(a3) joining together contact lines of said gasket part at said region corresponding to a corner of said solar cell module body.

19. The manufacturing method of a solar panel according to any of claims 15 to 18, wherein at an end part of at least one of said upper side part and said lower side part of said gasket part on a side facing said connecting part, a projection part is provided which is oriented inward so as to closely join with said peripheral edge part of said solar cell module body,
wherein said step (a) includes:
(a4) sealing said inside of said gasket part by an elastic force provided by said plate spring structure between at least one of said upper and said lower side parts and said projection part.

20. The manufacturing method of a solar panel according to any of claims 15 to 19, wherein said step (c) includes:
(c1) positioning said solar cell module body with respect to said frame structure by using said projection part oriented outward and provided at said end part of at least one of said upper side part and said lower side part of said gasket part on said side facing said connecting part.
